# EUROPEAN PATENT SPECIFICATION

(11) **EP 1 843 188 B1**
(45) Date of publication and mention of the grant of the patent: **03.08.2011**
(21) Application number: 07006286.4
(22) Date of filing: 27.03.2007
(51) Int. Cl.: G02B 21/00, G02B 21/34

(54) **Stabilizer for in vivo examination**
Stabilisator für In-vivo-Untersuchungen
Stabilisateur pour examen in vivo

(30) Priority: 06.04.2006 JP 2006105592
(43) Date of publication of application: 10.10.2007
(73) Proprietor: Olympus Corporation, Tokyo 151-0072 (JP)
(72) Inventor: Tanikawa, Yoshihisa, Tokyo 103-0013 (JP); Yoshii, Toshihiro, Hachioji-shi, Tokyo 192-0914 (JP)
(74) Representative: von Hellfeld, Axel

(56) References cited:
- US-A- 5 719 700
- US-A- 5 995 283
- US-B1- 6 424 852

## Description

### BACKGROUND OF THE INVENTION

### 1. FIELD OF THE INVENTION

The present invention relates to a stabilizer for in vivo examination that is placed in contact with a biological specimen to suppress movement of the biological specimen during examination thereof.

### 2. DESCRIPTION OF RELATED ART

A known stabilizer for in vivo examination is disclosed in, for example, Japanese Unexamined Patent Application, Publication No. 2005-338631.

This stabilizer for in vivo examination includes a tip having a round shape or a U shape. Dynamic movement of a biological specimen, such as pulsing, can be suppressed by applying negative pressure to a suction hole provided on the surface that contacts the biological specimen to suck the specimen by virtue of the suction force. A microscope examination system including this stabilizer for in vivo examination is advantageous in that microscope examination can be performed while suppressing pulsing of the biological specimen, thereby providing sharp blur-free images.

However, there is a wide range of types, sizes, and shapes of biological specimens examined in such a microscope examination system, and in addition, the magnification or the like may be changed during examination of the same specimen. Accordingly, in the stabilizer for in vivo examination disclosed in Japanese Unexamined Patent Application, Publication No. 2005-338631, which has a single tip, the entire stabilizer for in vivo examination must be replaced. In such a case, the space on a stage for placing a biological specimen is very small because the biological specimen and an objective unit are disposed thereon. Accordingly, a replacement procedure for the entire large stabilizer for in vivo examination may be difficult. Furthermore, the stabilizer for in vivo examination suffers from the problem that it may fall onto on the biological specimen or may contact the specimen during the replacement procedure, resulting damage to the biological specimen.

Document US 5,995,283 concerns a three-dimensional scanning confocal laser microscope. In one embodiment, for stabilization of living skin, a microscope-to-skin coupling is placed on the skin. The microscope-to-skin coupling is in a fixed manner connected to an objective lens.

Document US 5,719,700 concerns an apparatus for in vivo observation of the microscopic structure of skin or similar tissue. In one embodiment, a contact end piece is fixed by means of screws to a movable arm comprising a lens.

Document US 6,424,852 B1 concerns a system for confocal imaging within dermal tissue. A tissue stabilization system comprises a confocal imaging head having an objective lens and an attachment for fixing the imaging head onto a tissue to be examined. For fixing the attachment to the area to be examined, air is evacuated from the attachment.

Document WO 03/107066 A1 concerns a modular manipulation system for manipulating a sample under study with a microscope. The system comprises a plurality of manipulator modules having automatic drive mechanism that are operable to provide three degrees of translational movement as well as rotational movement of attached end-effectors around its own axes.

### BRIEF SUMMARY OF THE INVENTION

The present invention has been conceived in view of the above situation, and an object of the present invention is to provide a stabilizer for in vivo examination in which dynamic movement of various biological specimens can be effectively suppressed, while easily allowing compatibility with various biological specimens with a wide range of types, sizes, and shapes, and various types of examination methods of biological specimens.

In order to solve.the above problem, the present invention provides a stabilizer for in vivo examination having the features of claim 1.

According to an aspect, a stabilizer for in vivo examination that is placed in contact with a biological specimen in the vicinity of an observation optical axis during examination of the specimen to suppress movement thereof includes a tip configured to contact the biological specimen, and a movable member configured to support the tip so that the tip can move in a direction intersecting the observation optical axis. The tip is attached to the movable member in such a manner so as to be attachable thereto and detachable therefrom.

According to the aspect described above, by pressing the tip while in contact with the biological specimen in the vicinity of the observation optical axis, dynamic movement of the biological specimen can be suppressed. By performing examination using, for example, a microscope in this state, sharp blur-free images can be acquired.

When the biological specimen is changed or when the examination method is changed and movement of the biological specimen must be suppressed using a different tip, the movable member supporting the tip is operated to move the original tip in a direction intersecting the observation optical axis. Accordingly, the tip can be retracted from a narrow space above the biological specimen.

The tip is attached to the movable member in such a manner that it can be attached thereto and detached therefrom. Therefore, by detaching the tip from the movable member in the state in which the tip is retracted from the narrow space above the biological specimen, the tip can be easily replaced without damaging the biological specimen.

In the aspect described above, the movable member may be supported so as to rotate around an axis parallel to the observation optical axis and separated therefrom.

In the aspect described above, the movable member may be supported so as to rotate around an axis parallel to a direction intersecting the observation optical axis.

According to the above structure, by simply rotating the movable member around the axis, the tip, which is attached to the end of the movable member, can be moved in a direction intersecting the observation optical axis and can be easily retracted from the narrow space above the biological specimen.

In the aspect described above, the movable member may be provided so as to translate in a direction intersecting the observation optical axis.

According to this structure, for example, when the tip is replaced with another tip, by simply translating the movable member in directions intersecting the observation optical axis, the tip attached to the end of the movable member can be moved in directions intersecting the observation optical axis and can be easily retracted from the narrow space above the biological specimen.

The present invention affords an advantage in that dynamic movement of various biological specimens can be effectively suppressed, while easily allowing compatibility with various biological specimens with a wide range of types, sizes, and shapes, and various types of examination methods of biological specimens.

### BRIEF DESCRIPTION OF THE SEVERAL VIEWS OF THE DRAWINGS

Fig. 1 is a front view showing a stabilizer for in vivo examination according to an embodiment of the present invention.
Fig. 2 is a plan view of the stabilizer for in vivo examination shown in Fig. 1.
Fig. 3 is a plan view illustrating detachment of a tip attached to the end of a rotating arm of the stabilizer for in vivo examination shown in Fig. 1.
Fig. 4 is a partial front view illustrating detachment of the tip from the rotating arm of the stabilizer for in vivo examination shown in Fig. 3.
Fig. 5 is a front view illustrating a modification of the stabilizer for in vivo examination shown in Fig. 1.
Fig. 6 is a plan view of the stabilizer for in vivo examination shown in Fig. 5.

### DETAILED DESCRIPTION OF THE INVENTION

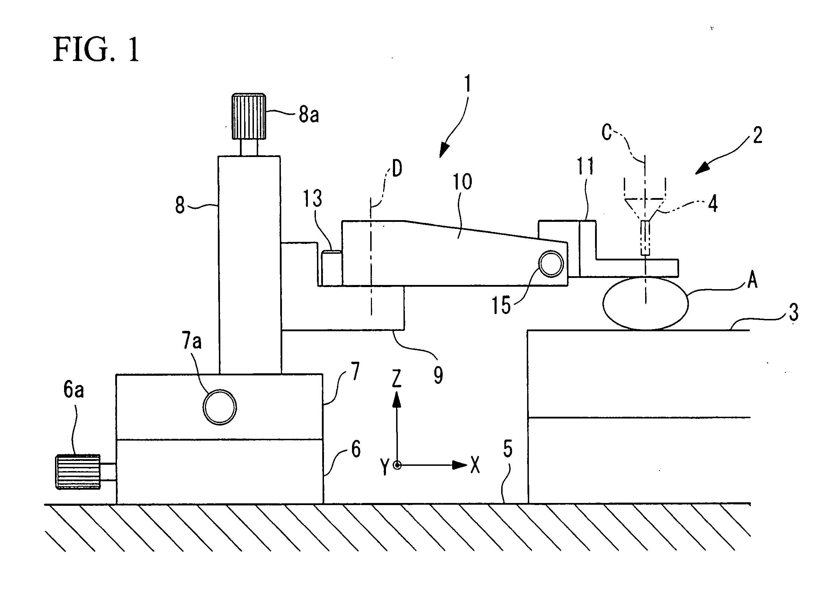

A stabilizer for in vivo examination 1 according to a first embodiment of the present invention will now be described with reference to Figs. 1 to 4.

As shown in Fig. 1, the stabilizer for in vivo examination 1 of this embodiment is a unit disposed near a microscope examination unit 2. The microscope examination unit 2 includes a stage 3 on which a specimen (biological specimen) A is placed, and an objective unit 4 that is disposed above the stage 3 so as to face the specimen A on the stage 3. Examples of the specimen A include biological tissue, such as cells and muscles, and organs, such as the heart and the liver, of mammals, e.g., small laboratory animals.

The stage 3 includes an adjusting dial (not shown). By operating the adjusting dial, the specimen A can be moved in two horizontal directions orthogonal to an optical axis C of the objective unit 4, e.g., in the X direction and the Y direction.

The objective unit 4 of the microscope examination unit 2 is configured so as to move in the vertical direction with an elevating/lowering mechanism (not shown). By disposing the objective unit 4 so as to be oriented downward, the specimen A on the stage 3 can be examined. Furthermore, by operating the elevating/lowering mechanism, the objective unit 4 can be moved closer to or farther away from the specimen A, thereby adjusting the focus.

The stabilizer for in vivo examination 1 of this embodiment includes an X-stage 6 fixed on a base 5, a Y-stage 7, a Z-stage 8, a rotating arm (movable member) 10 that is attached to a slider 9 of the Z-stage 8 so as to rotate around a vertical axis D, and a tip 11 that can be attached to and detached from the end of the rotating arm 10. The X-stage 6, the Y-stage 7, and the Z-stage 8 include adjusting dials 6a, 7a, and 8a, respectively. The rotating arm 10 and the tip 11 can be moved in the X, Y, and Z directions by operating the adjusting dials 6a, 7a, and 8a, respectively.

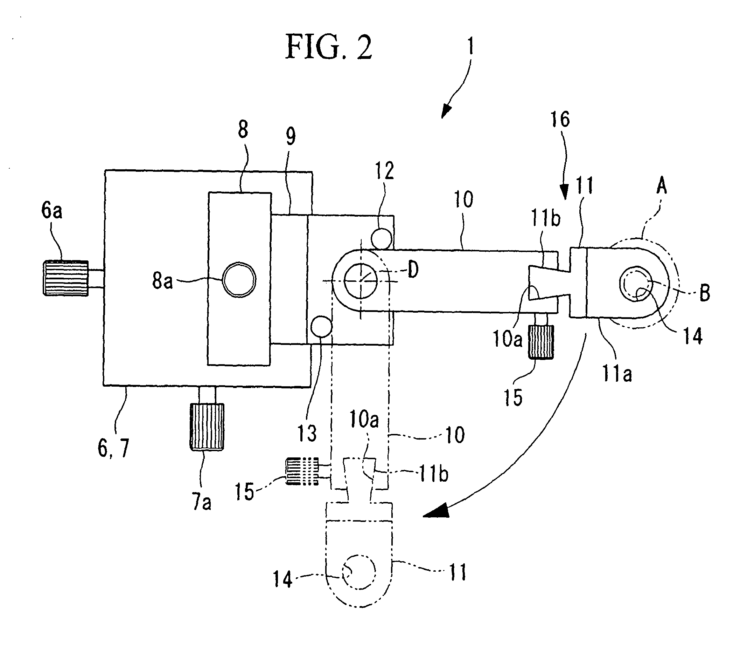

As shown in Fig. 2, stoppers 12 and 13 are provided at two positions of the slider 9 of the Z-stage 8. By bringing the rotating arm 10 into contact with the stoppers 12 and 13, the rotating angle of the rotating arm 10 can be limited within a predetermined angle, for example, 90 degrees.

As shown in Fig. 2, the tip 11 includes, for example, a flat-plate portion 11a in which a through hole 14 that is larger than an observation area B of the objective unit 4 is provided at the center. During microscope examination, a surface of the flat-plate portion 11a is pressed onto the outer surface of the specimen A so that the observation area B of the objective unit 4 is disposed in the through hole 14. Accordingly, microscope examination can be performed, while suppressing dynamic movement of the specimen A, such as pulsing.

An attaching-and-detaching mechanism 16 is provided between the tip 11 and the rotating arm 10. The attaching-and-detaching mechanism 16 is composed of a dovetail 11b provided at the tip 11, a dovetail groove 10a provided at the end of the rotating arm 10, and a push screw 15 that presses the dovetail 11b into the dovetail groove 10a while the dovetail 11b is fitted in the dovetail groove 10a. To change the tip 11, the push screw 15 is released, and the dovetail 11b is then slid along the dovetail groove 10a of the rotating arm 10, thus easily detaching the tip 11.

Various types of tips 11 are prepared corresponding to the types, sizes, and shapes of the specimen A or various examination methods of the specimen A. Each of the tips 11 includes the dovetail 11b having a uniform shape that can be fitted into the dovetail groove 10a of the rotating arm 10.

The rotating arm 10 can move between an observation position (shown by the solid line in Fig. 2) where the through hole 14 of the tip 11 attached to the end of the rotating arm 10 is disposed at a position corresponding to the observation optical axis C of the objective unit 4, and a retracted position (shown by the chain line in Fig. 2) at which the tip 11 is retracted from the observation position by 90 degrees. The retracted position is preferably at the location of the hand of the user of the microscope examination unit 2.

To perform microscope examination of the specimen A using the stabilizer for in vivo examination 1 of this embodiment having the above structure, by operating the Z-stage 8 of the stabilizer for in vivo examination 1, the tip 11 becomes close to the specimen A placed on the stage 3 of the microscope examination unit 2 from above, and the lower surface of the flat-plate portion 11a is brought into contact with the specimen A. In this step, the position of the through hole 14 provided in the tip 11 is adjusted to a position of the specimen A to be examined.

By further operating the Z-stage 8, the rotating arm 10 and the tip 11 are moved downward. Accordingly, the specimen A is pressed downward by the flat-plate portion 11a of the tip 11 and is sandwiched between the stage 3 and the flat-plate portion 11a, thereby suppressing dynamic movement of the specimen A in the vertical direction. Furthermore, since the tip 11 is brought into contact with the specimen A with a predetermined pressure, dynamic movement of the specimen A in the horizontal direction can also be suppressed to some degree by a frictional force generated on the contact surface between the lower surface of the flat-plate portion 11a of the tip 11 and the specimen A.

In this case, the observation area B of the objective unit 4 of the microscope examination unit 2 is disposed in the through hole 14 of the tip 11. Accordingly, the position of the objective unit 4 in the vertical direction is controlled by operating the elevating/lowering mechanism to adjust the focus, and microscope examination can be performed. According to the stabilizer for in vivo examination 1 of this embodiment, microscope examination can be performed with the microscope examination unit 2 while suppressing dynamic movement of the specimen A, thereby providing sharp blur-free images.

When the type, size, or shape of the specimen A is changed, or when examination conditions, such as the magnification of the specimen A, is changed, the objective unit 4 is moved upward by operating the elevating/lowering mechanism and the tip 11 is also moved upward by operating the Z-stage 8 so as to locate the tip 11 above the specimen A. As shown by the chain line in Fig. 2, the rotating arm 10 is then rotated in the horizontal direction with respect to the slider 9 of the Z-stage 8. Accordingly, the tip 11 is retracted from above the specimen A in the horizontal direction intersecting the optical axis C of the objective unit 4.

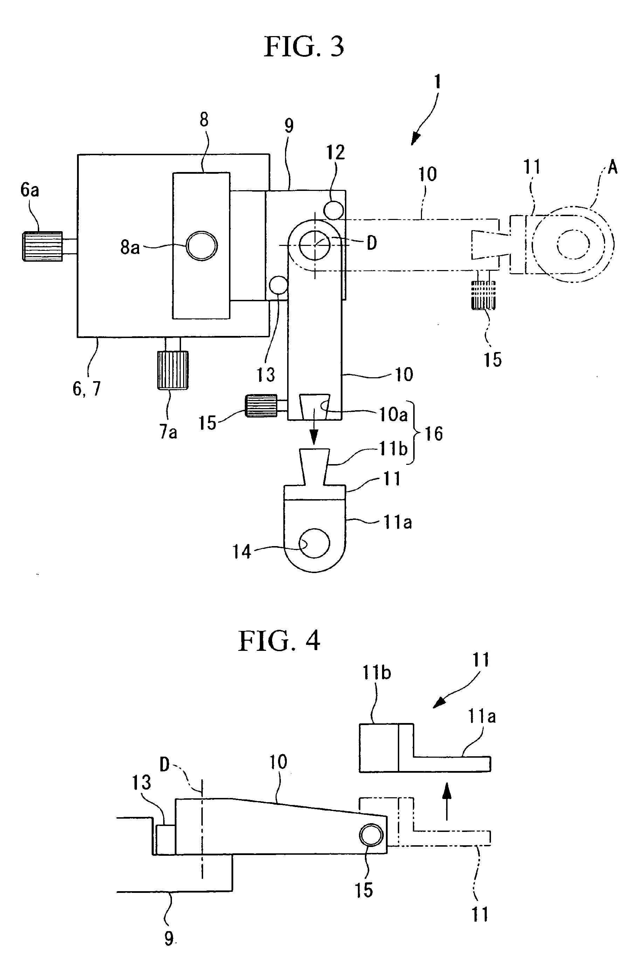

Subsequently, as shown in Figs. 3 and 4, the push screw 15 of the attaching-and-detaching mechanism 16 is released, and the dovetail 11b is slid along the dovetail groove 10a provided at the end of the rotating arm 10, thereby detaching the tip 11 from the rotating arm 10. According to this structure, the tip 11 can be detached from the rotating arm 10 at a position retracted from above the specimen A in the horizontal direction. Therefore, the tip 11 need not be detached from the rotating arm 10 in a narrow space between the objective unit 4 and the specimen A. Accordingly, this structure can prevent the problem of the tip 11 falling onto the specimen A, thereby damaging the specimen A, and the problem of the tip 11 colliding with the objective unit 4, thereby damaging the objective unit 4.

Furthermore, since the retracted position is at the location of the user's hand, the user can easily perform the replacement procedure of the tip 11 while the tip 11 is retracted.

By changing the tip 11 attached to the end of the rotating arm 10 as described above, appropriate microscope examination can be performed using an optimum tip 11 corresponding to the type, size, and shape of the specimen A or examination conditions such as the magnification of the specimen A.

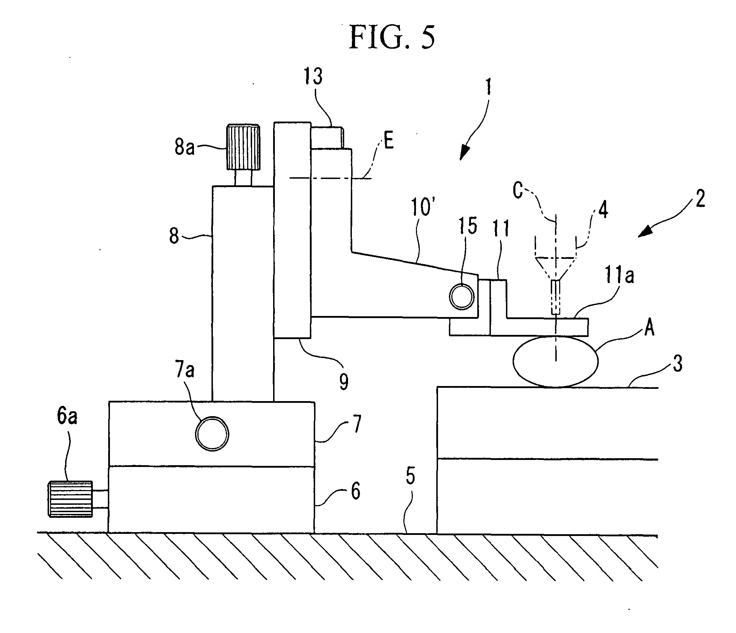

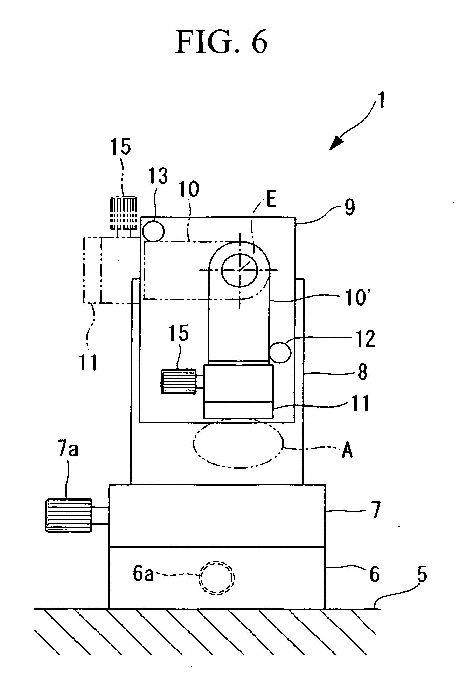

In the stabilizer for in vivo examination 1 of this embodiment, a description has been made of the case where the rotating arm 10 is provided so as to rotate around the axis D parallel to the observation optical axis C of the microscope examination unit 2. Alternatively, as shown in Figs. 5 and 6, a rotating arm 10' may be provided so as to rotate around a substantially horizontal axis E of the slider 9 of the Z-stage 8 that is substantially orthogonal to the observation optical axis C.

In this embodiment, by rotating the rotating arm 10 around the axis D parallel to the observation optical axis C and separated therefrom, the tip 11, which can be attached to and detached from the end of the rotating arm 10, is retracted from above the specimen A. Alternatively, for example, the tip 11 may be retracted by translating the tip 11 in a direction or directions intersecting the observation optical axis C by operating the X-stage 6 and/or the Y-stage 7, without rotating the rotating arm 10.

## Claims

1. A microscope examination system comprising a stabilizer (1) for in vivo examination and a microscope examination unit (2), the stabilizer (1) being placed in contact with a biological specimen (A) in the vicinity of an observation optical axis (C) of the microscope examination unit (2) during examination of the specimen (A) to suppress movement thereof, and comprising:
a Z-stage (8) having a slider (9) being capable of sliding in a vertical direction of the stabilizer;
a tip (11) configured to contact the biological specimen (A); and
a movable member (10) attached to the slider (9) and configured to support the tip (11), the movable member (10) being capable of rotating together with the tip (11) in a horizontal direction of the stabilizer (1), which is perpendicular to the vertical direction, between an observation position in which a through hole (14) provided in the tip (11) is disposed at a position corresponding to the observation optical axis (C) of the microscope examination unit (2) and a retracted position in which the tip (11) is retracted from the observation optical axis (C) of the microscope examination unit (2), wherein the rotating angle between the observation position and the retracted position is limited by two stoppers (12, 13) provided at the slider (9), and the tip (11) is attached to the movable member (10) in such a manner so as to be attachable thereto and detachable therefrom in both the observation position and the retracted position.

2. The microscope examination system according to Claim 1, wherein the movable member (10) is supported so as to rotate around an axis parallel to the observation optical axis (C) and separated therefrom.

3. The microscope examination system according to Claim 1, wherein the movable member (10) is supported so as to rotate around an axis parallel to a direction intersecting the observation optical axis (C).

4. The microscope examination system according to Claim 1, wherein the movable member (10) is provided so as to translate in a direction intersecting the observation optical axis (C).

## Patentansprüche

1. Mikroskop-Untersuchungssystem mit einem Stabilisator (1) für In-Vivo-Untersuchung und einer Mikroskop-Untersuchungseinheit (2), wobei der Stabilisator (1) in Kontakt mit einem biologischen Teststück (A) in der Nähe einer optischen Beobachtungsachse (C) der Mikroskop-Untersuchungseinheit (2) während einer Untersuchung des Teststücks (A) platziert ist, um eine Bewegung desselben zu unterdrücken, und mit:
einer Z-Stufe (8) mit einem Gleitelement (9), das in der Lage ist, in einer vertikalen Richtung des Stabilisators zu gleiten;
einer Spitze (11), die konfiguriert ist, um das biologische Teststück (A) zu kontaktieren; und
einem beweglichen Element (10), das an dem Gleitelement (9) angebracht ist und zum Haltern der Spitze (11) konfiguriert ist, wobei das bewegliche Element (10) in der Lage ist, sich zusammen mit der Spitze (11) in einer horizontalen Richtung des Stabilisators (1), die senkrecht zu der vertikalen Richtung ist, zwischen einer Beobachtungsposition, in der ein in der Spitze (11) vorgesehenes Durchgangsloch (14) an einer Position angeordnet ist, die der optischen Beobachtungsachse (C) der Mikroskop-Untersuchungseinheit (2) entspricht, und einer zurückgezogenen Position, in der die Spitze (11) von der optischen Beobachtungsachse (C) der Mikroskop-Untersuchungseinheit (2) zurückgezogen ist, zu drehen, wobei der Drehwinkel zwischen der Beobachtungsposition und der zurückgezogenen Position durch zwei an dem Gleitelement (9) vorgesehene Anschläge (12, 13) begrenzt ist, und die Spitze (11) an dem beweglichen Element (10) derart angebracht ist, dass sie sowohl in der Beobachtungsposition als auch in der zurückgezogenen Position an diesem befestigbar und von diesem lösbar ist.

2. Mikroskop-Untersuchungssystem nach Anspruch 1, wobei das bewegliche Element (10) so gehaltert ist, dass es sich um eine zu der optischen Beobachtungsachse (C) parallelen und von dieser getrennten Achse dreht.

3. Mikroskop-Untersuchungssystem nach Anspruch 1, wobei das bewegliche Element (10) so gehaltert ist, dass es sich um eine Achse dreht, die parallel zu einer die optische Beobachtungsachse (C) schneidenden Richtung ist.

4. Mikroskop-Untersuchungssystem nach Anspruch 1, wobei das bewegliche Element (10) so vorgesehen ist, dass es sich in einer die optische Beobachtungsachse (C) schneidenden Richtung fortbewegt.

## Revendications

1. Système d'examen au microscope comprenant un stabilisateur (1) pour un examen in vivo et une unité d'examen au microscope (2), le stabilisateur (1) étant placé en contact avec un spécimen biologique (A) à proximité d'un axe optique d'observation (C) de l'unité d'examen au microscope (2) pendant l'examen du spécimen (A) pour supprimer un mouvement de celui-ci, et comprenant :
un étage Z (8) ayant un coulisseau (9) étant apte à coulisser dans un sens vertical du stabilisateur ;
une pointe (11) configurée pour venir au contact du spécimen biologique (A) ; et
un élément mobile (10) fixé au coulisseau (9) et configuré pour supporter la pointe (11), l'élément mobile (10) étant apte à tourner en même temps que la pointe (11) dans un sens horizontal du stabilisateur (1), qui est perpendiculaire au sens vertical, entre une position d'observation dans laquelle un trou traversant (14) prévu dans la pointe (11) est disposé en une position correspondant à l'axe optique d'observation (C) de l'unité d'examen au microscope (2) et une position rétractée dans laquelle la pointe (11) est rétractée de l'axe optique d'observation (C) de l'unité d'examen au microscope (2), dans lequel l'angle de rotation entre la position d'observation et la position rétractée est limité par deux butées (12, 13) prévues au niveau du coulisseau (9), et la pointe (11) est fixée à l'élément mobile (10) de manière à pouvoir être fixée à celui-ci et détachée de celui-ci à la fois dans la position d'observation et dans la position rétractée.

2. Système d'examen au microscope selon la revendication 1, dans lequel l'élément mobile (10) est supporté de manière à tourner autour d'un axe parallèle à l'axe optique d'observation (C) et séparé de celui-ci.

3. Système d'examen au microscope selon la revendication 1, dans lequel l'élément mobile (10) est supporté de manière à tourner autour d'un axe parallèle à un sens coupant l'axe optique d'observation (C).

4. Système d'examen au microscope selon la revendication 1, dans lequel l'élément mobile (10) est prévu de manière à effectuer une translation dans un sens coupant l'axe optique d'observation (C).
